(19) Europäisches Patentamt
European Patent Office
Office européen des brevets

(11) EP 0 630 942 B1

(12) EUROPÄISCHE PATENTSCHRIFT

(45) Veröffentlichungstag und Bekanntmachung des Hinweises auf die Patenterteilung:
**25.08.1999 Patentblatt 1999/34**

(51) Int Cl.[6]: **C08L 71/00**, C08L 81/06, C08L 35/06, C08L 79/08, C08L 79/04

(21) Anmeldenummer: **94109382.5**

(22) Anmeldetag: **17.06.1994**

(54) **Formmassen auf der Grundlage von Polyarylenethern**

Polyarylether moulding masses

Masses à mouler de poly(éther d'aryle)

(84) Benannte Vertragsstaaten:
**BE CH DE FR GB IT LI NL**

(30) Priorität: **24.06.1993 DE 4321002**
**07.03.1994 DE 4407485**

(43) Veröffentlichungstag der Anmeldung:
**28.12.1994 Patentblatt 1994/52**

(73) Patentinhaber: **BASF Aktiengesellschaft**
**67063 Ludwigshafen (DE)**

(72) Erfinder:
- **Weber, Martin, Dr.**
**D-67433 Neustadt (DE)**
- **Guentherberg, Norbert, Dr.**
**D-67346 Speyer (DE)**

(56) Entgegenhaltungen:
**EP-A- 0 044 703** **EP-A- 0 188 904**
**EP-A- 0 375 961**

- **DATABASE WPI Derwent Publications Ltd., London, GB; AN 87-146951(21) & JP-A-62 084 502 (DENKI KAGAKU KK) 18. April 1987**
- **DATABASE WPI Derwent Publications Ltd., London, GB; AN 86-24381(37) & JP-A-61 174 249 (DANIPPON INK CHEM KK) 5. August 1986**

EP 0 630 942 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft Formmassen aus

A) 1 bis 99 Gew.-% einer Mischung aus Polyarylenethern, die reaktive Endgruppen enthalten und Polyarylenethern, die inerte Endgruppen enthalten, wobei weniger als 50 Gew.-%, bezogen auf A, Polyarylenether mit zwei reaktiven Endgruppen pro Kette sind und wobei die Polyarylenether die wiederkehrenden Einheiten I

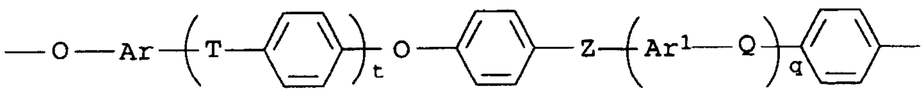 (I),

in denen t und q jeweils eine ganze Zahl 0, 1, 2 oder 3 bedeuten können,

T, Q und Z jeweils eine chemische Bindung oder eine Gruppe ausgewählt aus -O-, -S-, $-SO_2-$, S=O, C=O, -N=N-, $R^aC=CR^b-$ und $-CR^cR^d-$ sein können, mit der Maßgabe, daß mindestens eine der Gruppen T, Q oder Z $-SO_2-$ oder C=O bedeutet,

$R^a$ und $R^b$ jeweils ein Wasserstoffatom oder eine $C_1$- bis $C_{10}$-Alkylgruppe bedeuten,

$R^c$ und $R^d$ jeweils ein Wasserstoffatom, eine $C_1$- bis $C_{10}$-Alkyl-, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, bedeuten,

Ar und $Ar^1$ für $C_6$- bis $C_{18}$-Arylgruppen stehen, wobei diese Substituenten haben können, ausgewählt aus $C_1$- bis $C_{10}$-Alkyl, $C_6$- bis $C_{18}$-Aryl, $C_1$ bis $C_{10}$-Alkoxy und Halogen,

enthalten,

B) 1 bis 99 Gew.-% Copolymeren enthaltend Einheiten, die sich von

$b_1$) aromatischen Vinylverbindungen,
$b_2$) cyclischen $\alpha,\beta$-ungesättigten Dicarbonsäureanhydriden und
$b_3$) cyclischen $\alpha,\beta$-ungesättigten Dicarbonsäureimiden, welches am Stickstoff mit

- Wasserstoff,
- $C_1$- bis $C_{20}$-Alkyl oder $C_1$- bis $C_{20}$-Alkoxy, wobei die Kohlenstoffkette mit einem oder mehreren Sauerstoffatomen unterbrochen sein kann und keines der Sauerstoffatome des Alkoxyrestes direkt mit dem Stickstoffatom des Imids oder einem anderen Sauerstoffatom des Alkoxyrestes verknüpft ist,
- $C_4$- bis $C_{20}$-Cycloalkyl oder $C_1$- bis $C_2$-alkylsubstituiertem $C_4$- bis $C_{20}$-Cycloalkyl,
- $C_6$- bis $C_{18}$-Aryl oder $C_1$- bis $C_{10}$-alkylsubstituiertem $C_6$-bis $C_{18}$-Aryl

substituiert sind, und

C) 0 bis 60 Gew.-% faser- oder teilchenförmigen Füllstoffen ausgewählt aus der Gruppe Kohlenstoff, Glas, Quarz, Aramid, Alkali-, Erdalkalicarbonate, Alkali-, Erdalkalisilikate,

D) 0 bis 45 Gew.-% schlagzähmodifizierende Kautschuke, und

E) 0 bis 40 Gew.-% Flammschutzmittel, Pigmente und Stabilisatoren.

Daneben betrifft die vorliegende Erfindung die Verwendung dieser Formmassen.
Hochtemperaturbeständige thermoplastische Massen, die Copolymere aus Styrol, Maleinsäureanhydrid und N-Phenylmaleinsäureimid enthalten können, waren aus der JP-A 62084-502 bekannt.
Der vorliegenden Erfindung lag die Aufgabe zugrunde, Formmassen auf der Basis von Polyarylenethern zur Verfügung zu stellen, die sich neben guter Verarbeitbarkeit und einem ausgewogenen Eigenschaftsspektrum insbesondere dadurch auszeichnen, daß sie selbst bei längerer Behandlung mit Wasser oder Wasserdampf weniger Wasser aufnehmen als herkömmliche Polyarylenether.

Diese Aufgabe wird von den eingangs definierten Formmassen erfüllt.

Komponente A

Als Komponente A enthalten die Formmassen erfindungsgemäß 1 bis 99, bevorzugt 5 bis 95 Gew.-% einer Mischung von Polyarylenethern. Meist enthalten die Formmassen jedoch 10 oder mehr Gew.-%, beispielsweise 15 oder mehr Gew.-% dieser Mischung. Im allgemeinen ist die Mischung aus den Polyarylenethern bis zu 90 % in den Formmassen enthalten. Bevorzugt beträgt der Anteil der Komponente A an den Formmassen 20 bis 80 Gew.-%.

Die Polyarylenether A, die in der Mischung enthalten sind, können sowohl unsubstituierte als auch substituierte Arylengruppen enthalten. Bevorzugt enthalten die Polyarylenether A wiederkehrende Einheiten I

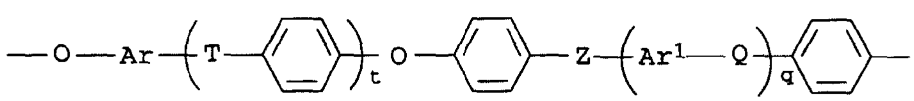

(I)

Die erfindungsgemäßen Formmassen können aber auch eine Mischung unterschiedlicher Polyarylenether A enthalten.

Dabei können t und q jeweils den Wert 0, 1, 2 oder 3 annehmen. T, Q und Z können unabhängig voneinander gleich oder verschieden sein. Sie können eine chemische Bindung oder eine Gruppe ausgewählt aus -O-, $-SO_2-$, -S-, C=O, -N=N- und S=O sein. Daneben können T, Q und Z auch für eine Gruppe der allgemeinen Formel $-R^aC=CR^b-$ oder $-CR^cR^d-$ stehen, wobei $R^a$ und $R^b$ jeweils Wasserstoff oder $C_1$ bis $C_{10}$-Alkylgruppen, $R^c$ und $R^d$ jeweils Wasserstoff, $C_1$- bis $C_{10}$-Alkyl- wie Methyl, Ethyl, n-Propyl, i-Propyl, t-Butyl, n-Hexyl, $C_1$- bis $C_{10}$-Alkoxy wie Methoxy, Ethoxy, n-Propoxy, i-Propoxy, n-Butoxy oder C6- bis C18-Arylgruppen wie Phenyl oder Naphthyl bedeuten. $R^c$ und $R^d$ können aber auch zu einem cycloaliphatischen Ring verknüpft sein. Bevorzugt sind cycloaliphatische Ringe mit 4 bis 7 Kohlenstoffatomen. Darunter bedeutet $-CR^cR^d-$ bevorzugt einen Cyclopentyl- oder Cyclohexylring. Die cycloaliphatischen Ringe können mit einem oder mehreren Alkylresten, bevorzugt Methyl substituiert sein. Bevorzugt werden Polyarylenether A, in denen T, Q und Z -O-, $-SO_2-$, C=O, eine chemische Bindung oder eine Gruppe der Formel $-CR^cR^d$ bedeuten. Zu den bevorzugten Resten $R^c$ und Rd zählen Wasserstoff und Methyl. Von den Gruppen T, Q und Z bedeutet mindestens eine $-SO_2-$ oder C=O. Ar und $Ar^1$ stehen für $C_6$- bis $C_{18}$-Arylgruppen, wie 1,5-Naphthyl, 1,6-Naphthyl, 2,7-Naphthyl, 1,5-Anthryl, 9,10-Anthryl, 2,6-Anthryl, 2,7-Anthryl oder Biphenyl, insbesondere Phenyl. Vorzugsweise sind diese Arylgruppen nicht substituiert. Sie können jedoch Substituenten ausgewählt aus $C_1$- bis $C_{10}$-Alkyl- wie Methyl, Ethyl, n-Propyl, i-Propyl, t-Butyl, n-Hexyl, $C_6$- bis $C_{18}$-Aryl wie Phenyl oder Naphthyl, $C_1$-bis $C_{10}$-Alkoxyreste wie Methoxy, Ethoxy, n-Propoxy, i-Propoxy, n-Butoxy und Halogenatome haben. Zu den davon bevorzugten Substituenten gehören Methyl, Phenyl, Methoxy und Chlor.

Einige geeignete wiederkehrende Einheiten sind im folgenden aufgeführt:

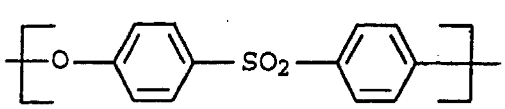

($I_1$)

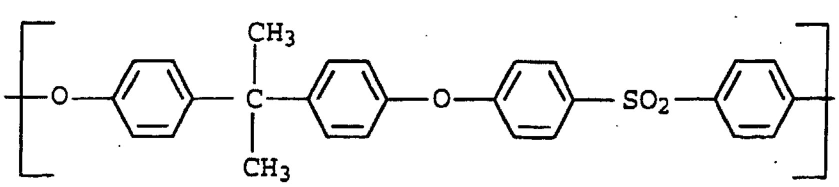

($I_2$)

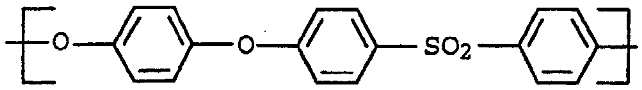

$(I_3)$

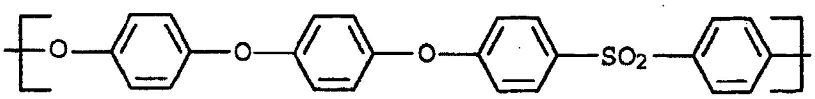

$(I_4)$

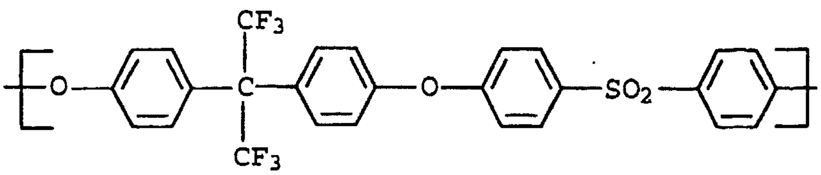

$(I_5)$

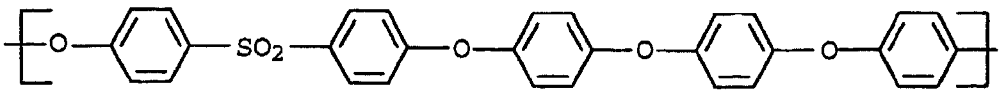

$(I_6)$

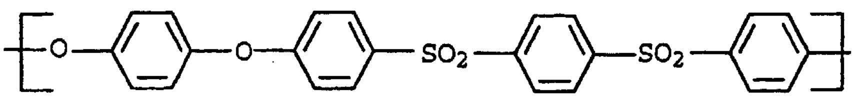

$(I_7)$

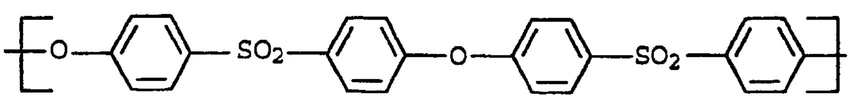

$(I_8)$

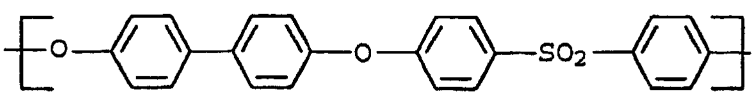

$(I_9)$

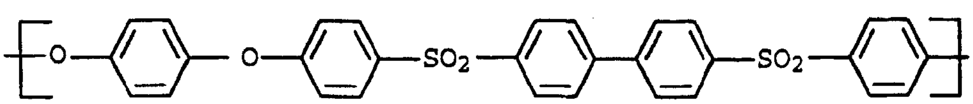

$(I_{10})$

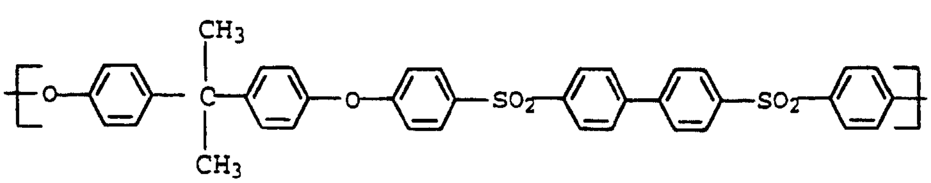

$(I_{11})$

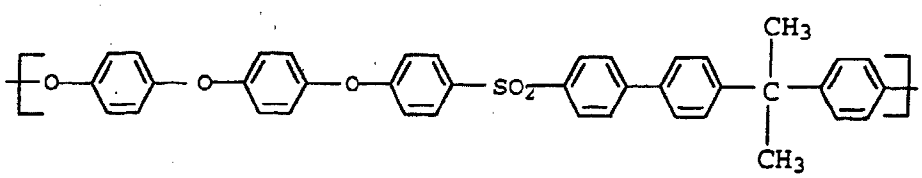

($I_{12}$)

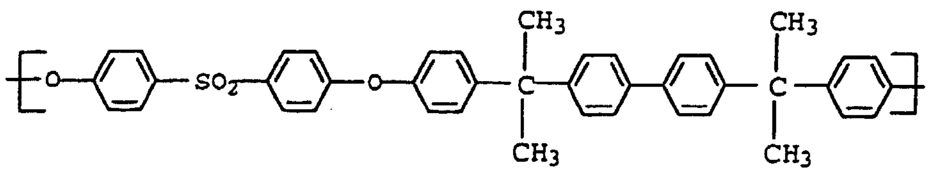

($I_{13}$)

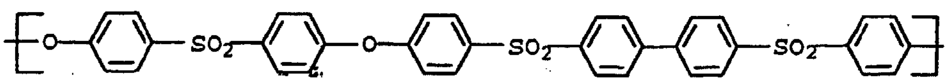

($I_{14}$)

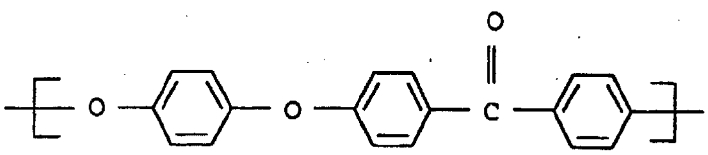

($I_{15}$)

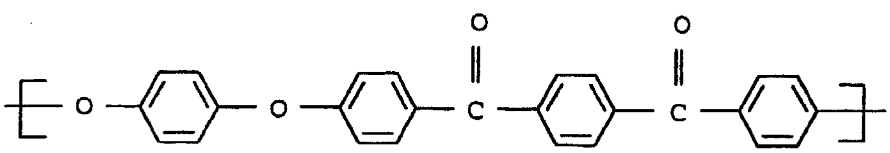

($I_{16}$)

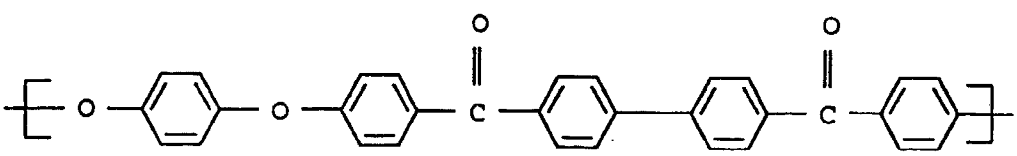

($I_{17}$)

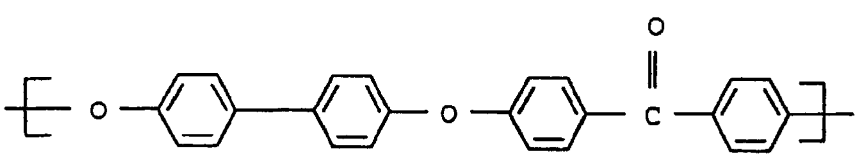

($I_{18}$)

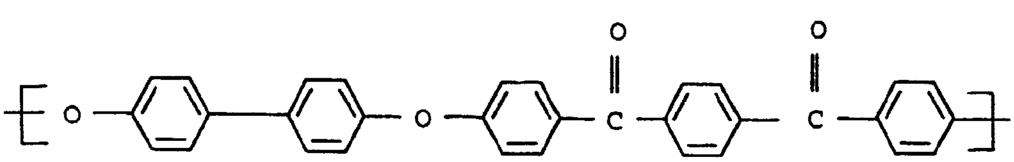

($I_{19}$)

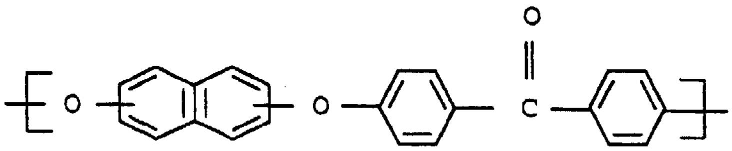
(I20)

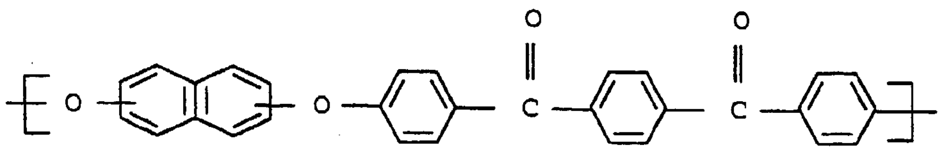
(I21)

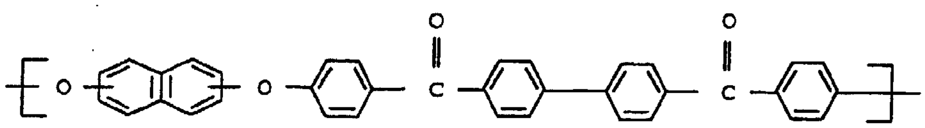
(I22)

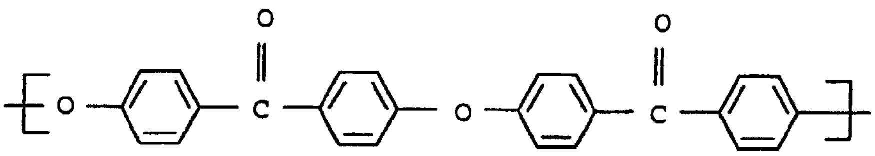
(I23)

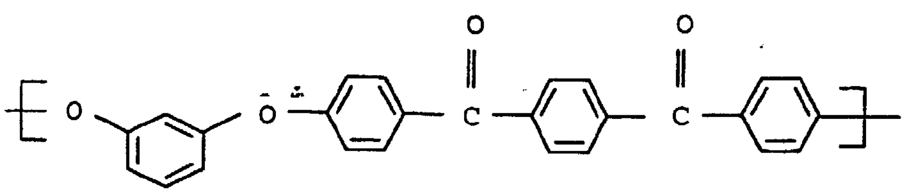
(I24)

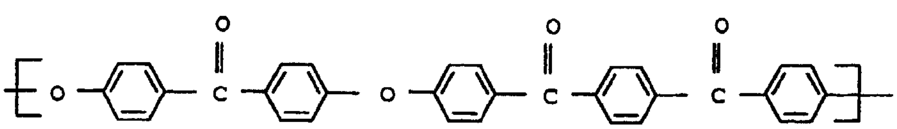
(I25)

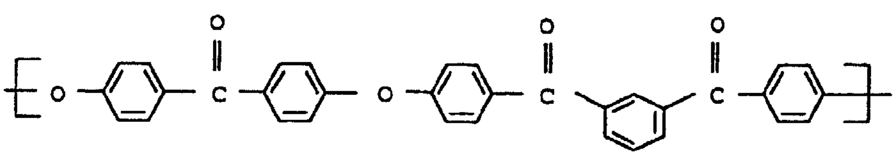
(I26)

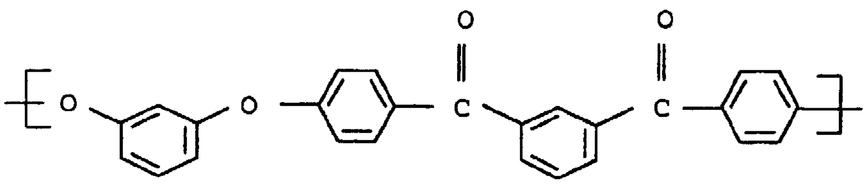

($I_{27}$)

Ganz besonders werden Formmassen bevorzugt, die als Komponente A Polyarylenether mit wiederkehrenden Einheiten ($I_1$), ($I_2$), ($I_{25}$) oder ($I_{26}$) enthalten. Dazu zahlen beispielsweise Formmassen, die als Komponente A Polyarylenether mit 3 bis 97, bevorzugt 5 bis 95 Mol-% wiederkehrende Einheiten ($I_1$) und 3 bis 97, bevorzugt 5 bis 95 Mol-% wiederkehrende Einheiten ($I_2$) enthalten.

Die Polyarylenether A können auch Co- oder Blockcopolymere sein, in denen Polyarylenethersegmente und Segmente von anderen thermoplastischen Polymeren wie Polyamiden, Polyestern, aromatischen Polycarbonaten, Polyestercarbonaten, Polysiloxanen, Polyimiden oder Polyetherimiden vorliegen. Die Molekulargewichte $M_n$ (Zahlenmittel) der Blöcke- bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Im allgemeinen weisen die Polyarylenether A mittlere Molekulargewichte $\overline{M}_n$ (Zahlenmittel) im Bereich von 10 000 bis 60 000 g/mol und relative Viskositäten von 0,25 bis 0,95 dl/g auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder in 96 %iger Schwefelsäure bei jeweils 20°C bzw. 25°C gemessen.

Polyarylenether mit wiederkehrenden Einheiten I sind an sich bekannt und können nach bekannten Methoden hergestellt werden.

Sie entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Der DE-A-38 43 438 ist beispielsweise eine ausführliche Zusammenstellung geeigneter Monomerer zu entnehmen. Geeignete Verfahren werden unter anderem in der US-A-3 441 538, 4 108 837, der DE-A1-27 38 962 und der EP-A1-361 beschrieben. Polyarylenether, die Carbonylfunktionen enthalten, sind auch durch elektrophile (Friedel-Crafts)-Polykondensation zugänglich, wie unter anderem in der WO 84/03892 beschrieben. Bei der elektrophilen Polykondensation werden zur Bildung der Carbonylbrücken entweder Dicarbonsäurechloride oder Phosgen mit Aromaten, welche zwei - durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Bevorzugte Verfahrensbedingungen zur Synthese von Polyarylenethern sind beispielsweise in den EP-A-113 112 und 135 130 beschrieben. Besonders geeignet ist die Umsetzung der Monomeren in aprotischen Lösungsmitteln, insbesondere N-Methylpyrrolidon, in Gegenwart von wasserfreiem Alkalicarbonat, insbesondere Kaliumcarbonat. Die Monomeren in der Schmelze umzusetzen, hat sich in vielen Fällen ebenso als vorteilhaft erwiesen.

Je nach gewählten Synthesebedingungen können die Polyarylenether unterschiedliche Endgruppen aufweisen. Darunter sind solche, die sich gegenüber den Copolymeren B inert verhalten und solche, die mit funktionellen Gruppen der Copolymeren B, insbesondere mit Anhydridgruppen, reagieren können. Zu den inerten Endgruppen zählen Halogen-, insbesondere Chlor-, Alkoxy-, vor allem Methoxy- oder Ethoxy-, Aryloxy-, bevorzugt Phenoxy oder Benzyloxygruppen. Als Beispiele für reaktive Endgruppen sind Hydroxy-, Amino- oder Epoxygruppen zu nennen.

Die Synthese hydroxyterminierter Polyarylenether ist beispielsweise durch geeignete Wahl des stöchiometrischen Verhältnisses von Dihydroxy- und Dihalogenmonomeren möglich (s. z.B. H.-G. Elias, "Makromoleküle" 4. Aufl., Hüthig & Wepf Verlag, Basel 1981, Seite 491). Polyarylenether mit Epoxyendgruppen sind z.B. ausgehend von hydroxyendgruppen-haltigen Polyarylenethern durch Umsetzen mit Epichlorhydrin zugänglich (US 4 448 948). Die Herstellung von Polyarylenethern mit Aminoendgruppen kann beispielsweise durch Verwendung von p-Aminophenol bei der Polykondensation erfolgen, wie in J.E. McGrath et al Polymer 30, 1552 (1989) beschrieben.

Die erfindungsgemäßen Formmassen enthalten als Komponente A Mischungen aus Polyarylenethern mit reaktiven und solchen mit inerten Endgruppen. Dabei enthalten die Mischungen weniger als 50 Gew.-%, bezogen auf A, Polyarylenether mit zwei reaktiven Endgruppen pro Kette. Es ist besonders bevorzugt, wenn die Polyarylenether A im Durchschnitt etwa eine reaktive Endgruppe und eine inerte Endgruppe pro Kette enthalten. Bei zu hohen Anteilen, ab etwa 50 Gew.-% von Polyarylenethern mit zwei reaktiven Endgruppen pro Kette an der Komponente A können unlösliche Umsetzungsprodukte mit der Komponente B entstehen.

Komponente B

Als Komponente B enthalten die erfindungsgemäßen Formmassen 1 bis 99, bevorzugt 5 bis 95 Gew.-% Copolymere. Meist enthalten die Formmassen jedoch 90 Gew.-% oder weniger dieser Copolymeren. Im allgemeinen sind die Copolymeren mit 10 Gew.-% oder mehr, beispielsweise 15 oder mehr Gew.-% in den Formmassen enthalten. Bevorzugt beträgt der Anteil der Komponente B an den Formmassen 20 bis 80 Gew.-%.

Die Copolymeren B enthalten Einheiten $b_1$ die sich von aromatischen Vinylverbindungen ableiten. Der Anteil der Einheiten $b_1$ beträgt bevorzugt 20 bis 90 Mol-%, insbesondere 40 bis 80 Mol-%. Ganz besonders bevorzugt enthalten die Copolymeren B 50 bis 75 Mol-% Einheiten, die sich von aromatischen Vinylverbindungen ableiten.

Als aromatische Vinylverbindungen kommen vor allem Styrol und Styrolderivate in Betracht. Zu den geeigneten Styrolderivaten zählen $\alpha$-Methylstyrol oder am aromatischen Kern substituierte Styrolderivate wie Vinyltoluol, t-Butylstyrol oder Chlorstyrol. Selbstverständlich können auch Mischungen unterschiedlicher aromatischer Vinylverbindungen eingesetzt werden. Ganz besonders bevorzugt wird Styrol verwendet.

Neben den Einheiten $b_1$ enthalten die Copolymere B Einheiten, die sich von cyclischen $\alpha,\beta$-ungesättigten Dicarbonsäureanhydriden $b_2$ ableiten, deren Anteil bevorzugt 1 bis 50 Mol-% beträgt. Copolymere B mit wesentlich weniger als 1 Mol-%, beispielsweise solche mit weniger als 0,5 Mol-% der Einheiten bi sind im allgemeinen nicht hinreichend temperaturbeständig. Solche mit wesentlich mehr als 50 Mol-% lassen sich meist nicht mehr gut verarbeiten, da sie zu spröde sind.

Bevorzugt enthalten die Copolymeren B 1 bis 35 Mol-% $b_2$, insbesondere 1 bis 25 Mol-%.

Zu den bevorzugten cyclischen $\alpha,\beta$-ungesättigten Dicarbonsäureanhydriden zählen solche mit 2 bis 20 Kohlenstoffatomen. Die Doppelbindung kann sowohl exocyclisch als auch endocyclisch sein. Darunter sind Maleinsäureanhydrid, Methylmaleinsäureanhydrid oder Itakonsäureanhydrid besonders bevorzugt. Mischungen unterschiedlicher Dicarbonsäureanhydride können ebenfalls verwendet werden.

Darüber hinaus enthalten die Copolymeren B Einheiten $b_3$, die sich von cyclischen $\alpha,\beta$-ungesättigten Dicarbonsäureimiden ableiten. Diese sind im allgemeinen von 9 bis 50 Mol-% in den Copoylmeren B enthalten. Bevorzugte Copolymere B enthalten 15 bis 50 Mol-% $b_3$, insbesondere 24 bis 49 Mol-%.

Im allgemeinen entsprechen die cyclischen $\alpha,\beta$-ungesättigten Dicarbonsäureimide den obengenannten Dicarbonsäureanhydriden $b_2$. Der Substituent am Stickstoff ist Wasserstoff oder ein $C_1$- bis $C_{20}$-Alkyl, $C_4$- bis $C_{20}$-Cycloalkyl, $C_1$- bis $C_{10}$-Alkyl-$C_6$- bis $C_{18}$-Aryl oder ein $C_6$- bis $C_{18}$-Arylrest.

Die Alkylreste können sowohl linear als auch verzweigt sein und mit einem oder mehreren Sauerstoffatomen unterbrochen sein, wobei die Sauerstoffatome nicht direkt mit den Stickstoffatomen und nicht direkt mit einem anderen Sauerstoffatom verknüpft sind. Zu diesen Alkylresten zählen Methyl, Ethyl, n-Propyl, i-Propyl, n-Butyl, i-Butyl, t-Butyl, n-Hexyl, n-Decyl und n-Dodecyl. Die Cycloalkylreste können sowohl unsubstituiert als auch substituiert sein. Geeignete Substituenten sind z.B. Alkylgruppen wie Methyl oder Ethyl. Als Beispiele für Cycloalkylreste sind Cyclobutyl, Cyclopentyl, Cyclohexyl und p-Methylcyclohexyl zu nennen. Die Alkylgruppe der Alkylarylreste kann sowohl linear als auch verzweigt sein und die Alkylarylreste können auch Substituenten haben. Beispiele derartiger Substituenten sind Alkylgruppen wie Methyl oder Ethyl aber auch Halogenatome wie Chlor oder Brom. Als Alkylarylreste können beispielsweise Benzyl, Ethylphenyl oder p-Chlorbenzyl verwendet werden. Ebenso können die Arylreste substituiert oder unsubstituiert sein, wobei z.B. Alkylgruppen wie Methyl oder Ethyl oder Halogenatome wie Chlor oder Brom geeignete Substituenten sind. Zu den bevorzugten Arylresten zählen Phenyl und Naphthyl. Ganz besonders bevorzugte Reste sind Cyclohexyl oder Phenyl.

Ferner können die Copolymere B noch 0 bis 30 Mol-%, bevorzugt 5 bis 25 Mol-% Einheiten $b_4$ enthalten, die sich von weiteren radikalisch polymerisierbaren Verbindungen ableiten.

Beispielhaft seien hier Acrylsäure und Acrylsäurederivate wie Methacrylsäure, Acrylnitril, Methacrylnitril, Acrylsäurealkylester wie Acrylsäureethylester oder Methacrylsäureethylester genannt.

Die Copolymeren B enthalten die Einheiten $b_1$ bis $b_4$ in einer statistischen Verteilung. In der Regel weisen die Copolymeren B Molekulargewichte MW (Gewichtsmittelwert) von 30 000 bis 500 000, bevorzugt 50 000 bis 250 000, insbesondere 70 000 bis 200 000 g/mol auf.

Die Copolymeren B lassen sich z.B. dadurch herstellen, daß man die entsprechenden Monomeren radikalisch polymerisiert. Dabei kann die Umsetzung sowohl in Suspension oder Emulsion als auch in Lösung oder Substanz durchgeführt werden, wobei letzteres bevorzugt wird. Die radikalische Reaktion läßt sich im allgemeinen mit den üblichen Methoden initiieren wie Licht oder bevorzugt mit Radikalstartern wie Peroxiden z.B. Benzoylperoxid.

Daneben können die Copolymeren B wie beispielsweise in der US 4 404 322 beschrieben auch dadurch hergestellt werden, daß zunächst die Komponenten $b_1$, $b_2$ und gegebenenfalls $b_4$ miteinander in einer radikalischen Reaktion umgesetzt werden und anschließend die in dem Reaktionsprodukt enthaltenen Anhydridgruppen teilweise mit entsprechenden primären Aminen oder Ammoniak in Imidgruppen überführt werden. Zu den primären Aminen zählen sowohl aliphatische als auch aromatische Amine. Geeignete primäre Amine sind beispielsweise $C_1$- bis $C_{20}$-Alkyl-, $C_4$- bis $C_{20}$-Cycloalkylamine, Amino-$C_1$- bis $C_{10}$-Alkylenaryle oder $C_6$- bis $C_{18}$-Arylamine. Die Alkylreste der

primären Amine können sowohl linear als auch verzweigt sein und mit einem oder mehreren Sauerstoffatomen unterbrochen sein, wobei die Sauerstoffatome nicht direkt mit den Stickstoffatomen und nicht direkt mit einem anderen Sauerstoffatom verknüpft sind. Zu diesen Alkylresten zählen Methyl, Ethyl, n-Propyl, i-Propyl, n-Butyl, i-Butyl, t-Butyl, n-Hexyl, n-Decyl und n-Dodecyl. Die Cycloalkylamine können sowohl unsubstituiert als auch substituiert sein. Geeignete Substituenten sind z.B. Alkylgruppen wie Methyl oder Ethyl. Als Beispiele für Cycloalkylreste sind Cyclobutyl, Cyclopentyl, Cyclohexyl und p-Methylcyclohexyl zu nennen. Die Alkylgruppe der Aminoalkylenaryle kann sowohl linear als auch verzweigt sein und die Arylgruppe kann auch Substituenten tragen. Beispiele derartiger Substituenten sind Alkylgruppen wie Methyl oder Ethyl aber auch Halogenatome wie Chlor oder Brom. Beispiele geeigneter Aminoalkylenaryle sind Aminophenylmethan, 1-Amino-2-phenylethan, 1-Amino-2-(p-chlorphenyl)ethan. Ebenso können die Arylamine substituiert oder unsubstituiert sein, wobei z.B. Alkylgruppen wie Methyl oder Ethyl oder Halogenatome wie Chlor oder Brom geeignete Substituenten sind. Zu den bevorzugten Arylaminen zählen Anilin und Naphthylamine, z. B. 2-Aminonaphthalin. Ganz besonders bevorzugt sind Cyclohexylamin oder Anilin.

Diese Reaktion wird in der Regel in Gegenwart eines tertiären Amins wie Trialkylamine oder Dialkylarylamine, z.B. Triethylamin oder N,N-Diethylanilin als Katalysator bei Temperaturen von 80 bis 350°C ausgeführt.

Bei dieser Herstellungsvariante werden vorzugsweise 50 bis 75 Mol-% aromatischer Vinylverbindungen mit 25 bis 50 Mol-% cyclischer α,β-ungesättigter Dicarbonsäureanhydride umgesetzt und anschließend mit Ammoniak oder primären Aminen (bs) behandelt, wobei das molare Verhältnis der Komponente $b_2$:$b_5$ 0,9 bis 1,1 beträgt.

Komponente C

Neben den Komponenten A und B können die erfindungsgemäßen Formmassen bis zu 60 Gew.-%, bevorzugt 0 bis 55 Gew.-%, faser- oder teilchenförmige Füllstoffe oder deren Mischungen enthalten. Diese können aus der Gruppe Kohlenstoff, Glas, Quarz, Aramid, Alkali- und Erdalkalicarbonate, Alkali- und Erdalkalisilikate ausgewählt sein.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Glasgeweben, Glasmatten oder Glasseidenrovings eingesetzt werden.

Als teilchenförmige Füllstoffe eignen sich amorphe Kieselsäure, Magnesiumcarbonat (Kreide), gepulverter Quarz, Glaskugeln und insbesondere Calciumsilikate wie Wollastonit und Kaolin (insbesondere kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit. Eine weitere bevorzugte Kombination enthält z.B. 20 Gew.-% Kohlefasern und 20 Gew.-% Wollastonit.

Komponente D

Die erfindungsgemäßen Formmassen können außerdem 0 bis 45, vorzugsweise 0 bis 30 Gew.-% schlagzähmodifizierender Kautschuke enthalten. Dabei eignen sich insbesondere solche, die Polyarylenether und/oder Copolymere B schlagzäh modifizieren können.

Als Kautschuke, die die Zähigkeit der Blends erhöhen, seien z.B. folgende genannt:

EP- bzw. EPDM-Kautschuke, die mit funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl (meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat auf zuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl (meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke sind an sich bekannt und beispielsweise in der EP-A 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkette Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Komponente E

Neben den beschriebenen Bestandteilen A bis D können die erfindungsgemäßen Formmassen noch 0 bis 40 Gew.-% Flammschutzmittel, Pigmente und Stabilisatoren enthalten.

Die erfindungsgemäßen Formmassen können nach an sich bekannten Verfahren, beispielsweise Extrusion, hergestellt werden.

Die erfindungsgemäßen Formmassen können z.B. hergestellt werden, indem man die Ausgangskomponenten in üblichen Mischvorrichtungen wie Schneckenextrudern vorzugsweise Zweischneckenextrudern, Brabender-Mühlen oder Banbury-Mühlen sowie Knetern mischt und anschließend extrudiert. Nach der Extrusion wird das Extrudat abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 250 bis 400°C, bevorzugt 280 bis 380°C, erforderlich. Nach der Extrusion wird das Extrudat in der Regel abgekühlt und zerkleinert.

Die erfindungsgemäßen Formmassen lassen sich thermoplastisch verarbeiten. Sie zeichnen sich durch gute Steifigkeit bei gleichzeitig guten Fließfähigkeiten und geringer Wasseraufnahme aus. Aufgrund der geringen Wasseraufnahme und der hohen Wärmeformbeständigkeit eignen sich die erfindungsgemäßen Formmassen vor allem zur Herstellung von Haushaltsgeräten oder Geräten für den medizinischen Sektor. Sie können jedoch auch auf dem Elektro- oder Elektronikbereich eingesetzt werden. Neben Formkörpern können auch Folien oder Fasern aus den erfindungsgemäßen Formmassen hergestellt werden.

Gemäß einer Ausführungsform enthalten die erfindungsgemäßen Formmassen als Komponente A Polyarylenether mit reaktiven Endgruppen. Bei den genannten Verarbeitungsbedingungen reagieren diese mit den funktionellen Gruppen, vor allem den Anhydridgruppen, der Copolymeren B. Werden diesen Umsetzungsprodukten keine Verstärkungsmittel zugesetzt, können sie als Verträglichkeitsvermittler für Blends auf der Basis von Polyarylenethern eingesetzt werden.

Die Verträglichkeitsvermittler werden bevorzugt in der Schmelze hergestellt. Sie können aber auch dadurch hergestellt werden, daß die Komponenten A und B in Lösung miteinander umgesetzt werden. Polar-aprotische Flüssigkeiten wie Dimethylformamid, Dimethylacetamid oder N-Methylpyrrolidon oder Mischungen polar-aprotischer Flüssigkeiten mit anderen organischen Lösungsmitteln, darunter vor allem Chlorbenzol, o-Dichlorbenzol, Tetrahydrofuran, Dichlormethan oder Chloroform sind Beispiele geeigneter Lösungsmittel. Die Umsetzung der Komponenten A und B erfolgt, abhängig von den reaktiven Endgruppen, im allgemeinen bei Temperaturen von 20 bis 200°C. Die Reaktionsdauer liegt in der Regel zwischen 30 Minuten und 24 Stunden. Im allgemeinen können die Polymeren A und B in Konzentrationen von jeweils 1 bis 30 Gew.-% in den Lösungen vorliegen, wobei hochkonzentrierte Lösungen, vor allem von 10 bis 25 gew.-%ige Lösungen, bevorzugt werden. Der Verträglichkeitsvermittler kann beispielsweise durch Ausfällen aus der Lösung mit einem Fällungsmittel, wie Wasser oder Ethanol isoliert werden. Die erfindungsgemäßen Verträglichkeitsvermittler zeichnen sich dadurch aus, daß sie mehrphasig sind, was sich beispielsweise anhand mehrerer auftretender Glasübergangstemperaturen nachweisen laßt. Die Phasenseperation kann auch anhand von transmissionselektronenmikroskopischen Aufnahmen belegt werden. Dadurch können sich die Verträglichkeitsvermittler in Blends an deren Phasen grenze anlagern und vermittelnd wirken.

## Beispiele

### Anwendungstechnische Prüfungen

Der E-Modul wurde im Zugversuch nach DIN 53 455 an Schulterstäben ermittelt. Die Fließfähigkeit wurde nach DIN 53 735 bei einer Temperatur von 300 bzw. 320°C und einer Belastung von 21,6 kg bestimmt.

Die Wasseraufnahme der Proben wurde an Schulterstäben, die für 2 Tage in siedendem Wasser gelagert waren, bestimmt.

Die Wärmeformbeständigkeit der Proben wurde mittels der Vicat-Erweichungstemperatur ermittelt. Die Vicat-Erweichungstemperatur wurde nach DIN 53 460, mit einer Kraft von 49,05 N und einer Temperatursteigerung von 50 K je Stunde, an Normkleinstäben ermittelt.

Die Viskositätszahl (VZ) der Komponenten wurde entweder in N-Methylpyrrolidon oder in einer Mischung aus Phenol und 1,2-Dichlormethan bestimmt.

Die Erweichungspunkte (Tg) der Komponenten und der Verträglichkeitsvermittler wurden mittels Differenzthermoanalyse (DSC) bei einer Aufheizrate von 10 K/min ermittelt.

Transmissionselektronenmikroskopische Aufnahmen wurden an ultradünnen Schichten aufgenommen.

Die Hydroxy-(OH)-Endgruppenkonzentration der Komponenten wurde mittels potentiometrischer Titration mit methanolischer Kaliumhydroxidlösung bestimmt. Die Amino-($NH_2$)-Endgruppenkonzentration wurde mittels potentiometrischer Titration mit Trifluormethansulfonsäure gemessen. Der Anteil der Chlor-(Cl)-Endgruppen wurde über den Gesamtgehalt an organisch gebundenem Chlor der Proben ermittelt.

### Komponente $A_1$

Polyarylenether aus 4,4'-Dihydroxydiphenylsulfon und 4,4'-Dichlordiphenylsulfon (Polyethersulfon: VZ = 56 ml/g, gemessen in 1 gew.-%iger Lösung in einem 1:1-Gemisches von Phenol und 1,2-Dichlorbenzol; z.B. Handelsprodukt Ultrason® E 2010, BASF), einer Tg von 225°C sowie einem Verhältnis von Cl-Endgruppen zu -$OCH_3$-Endgruppen von 60:40.

### Komponente $A_2$

Polyarylenether aus Bisphenol A und 4,4'-Dichlordiphenylsulfon (Polysulfon; VZ = 64 ml/g, gemessen in 1 gew.-%iger Lösung in einem 1:1-Gemisch von Phenol und 1,2-Dichlorbenzol; z.B. Handelsprodukt Ultrason® S 2010, BASF), einer Tg von 186°C sowie einem Verhältnis von Cl-Endgruppen zu $OCH_3$-Endgruppen von 60:40.

### Komponente $A_3$

Polyarylenether aus 4,4'-Di-(4-hydroxyphenyl)sulfon und 4,4'-Dichlordiphenylsulfon, charakterisiert durch eine VZ von 54,7 ml/g (gemessen in 1 gew.-%iger Lösung in N-Methylpyrrolidon bei 25°C), einer Tg von 218°C sowie einem Verhältnis von Cl-Endgruppen zu OH-Endgruppen von 53:47.

Komponente $A_4$

Polyarylenether aus 4,4'-Di-(4-hydroxyphenyl)sulfon und 4,4'-Dichlordiphenylsulfon, charakterisiert durch eine VZ von 46,2 ml/g (gemessen in 1 gew.-%iger Lösung in N-Methylpyrrolidon bei 25°C), einer Tg von 217°C sowie einem Verhältnis von Cl-Endgruppen zu OH-Endgruppen von 3:97.

Komponente $A_5$

Polyarylenether aus 4,4'-Di-(4-hydroxyphenyl)sulfon, 4-Aminophenol und 4,4'-Dichlordiphenylsulfon, charakterisiert durch eine VZ von 31,5 ml/g (gemessen in 1 gew.-%iger Lösung in N-Methylpyrrolidon bei 25°C), einer Tg von 214°C sowie einem Verhältnis von Cl-Endgruppen zu $NH_2$-Endgruppen zu OH-Endgruppen wie 50:43:7.

Komponente $A_6$

Polyarylenether aus 4,4'-Di-(4-hydroxyphenyl)sulfon, 4-Aminophenol und 4,4'-Dichlordiphenylsulfon, charakterisiert durch eine VZ von 18,9 ml/g (gemessen in 1 gew.-%iger Lösung in N-Methylpyrrolidon bei 25°C), einer Tg von 210°C sowie einem Verhältnis von Cl-Endgruppen zu-$NH_2$-Endgruppen zu OH-Endgruppen wie 2:73:25.

Komponente $B_1$

Terpolymer, bestehend aus 58 Mol-% Styrol, 3 Mol-% Maleinsäureanhydrid und 39 Mol-% N-Phenyl-Maleinimid.

Komponente $B_2$

Terpolymer, bestehend aus 58 Mol-% Styrol, 8 Mol-% Maleinsäureanhydrid und 34 Mol-% N-Phenyl-Maleinimid.

Komponente $C_1$

Glasfaserrovings einer Dicke von 10 µm aus E-Glas, die mit einer Schlichte aus Polyurethan ausgerüstet waren. Nach dem Einarbeiten lagen die mittleren Längen der Glasfasern etwa zwischen 0,1 und 0,5 mm.

Beispiele 1 bis 12 und Vergleichsbeispiele V1 bis V3

Die Komponenten wurden in einem Zweiwellenextruder bei einer Massetemperatur von 300 bis 350°C gemischt. Die Schmelze wurde durch ein Wasserbad geleitet und granuliert.

Das getrocknete Granulat wurde bei 310 bis 340°C zu Normkleinstäben und Schulterstäben verarbeitet.

Die Zusammensetzungen der Formmassen und die Ergebnisse der anwendungstechnischen Prüfungen sind den Tabellen 1 und 2 zu entnehmen.

Von der nach Beispiel 4 erhaltenen Formmasse wurden ultradünne Schnitte angefertigt und elektronenmikroskopisch bei einer Vergrößerung von 7000:1 untersucht, s. Bild 1/2.

Tabelle 1: Unverstärkte Formmassen

| Komponente [Gew.-%] | Formmasse Nr. | | | | | | | | | |
|---|---|---|---|---|---|---|---|---|---|---|
| | 1 | 2 | 3 | 4 | V1 | 5 | 6 | 7 | 8 | V2 |
| $A_1$ | 80 | 60 | 80 | 60 | 100 | - | - | - | - | - |
| $A_2$ | - | - | - | - | - | 80 | 60 | 80 | 60 | 100 |
| $B_1$ | 20 | 40 | - | - | - | 20 | 40 | - | - | - |
| $B_2$ | - | - | 20 | 40 | - | - | - | 20 | 40 | - |
| Eigenschaften | | | | | | | | | | |
| E-Modul [N/mm²] | 2950 | 3300 | 2900 | 3250 | 2750 | 2900 | 3200 | 2870 | 3150 | 2700 |
| MVI*1 [ml/10'] | 142 | 240 | 120 | 218 | 53 | - | - | - | - | - |
| MVI*2 [ml/10'] | - | - | - | - | - | 130 | 230 | 115 | 210 | 62 |
| Vicat B [°C] | 217 | 216 | 216 | 214 | 220 | 188 | 190 | 185 | 189 | 186 |
| Wasseraufnahme [%] | 1,4 | 1,2 | 1,5 | 1,2 | 1,9 | 0,6 | 0,5 | 0,7 | 0,5 | 1,0 |

MVI*1: Meßtemperatur 320°C

MVI*2: Meßtemperatur 300°C

V1, V2: Vergleichsversuch

Tabelle 2: Verstärkte Formmassen

| Komponente [Gew.-%] | Formmasse Nr. | | | | |
|---|---|---|---|---|---|
| | 9 | 10 | 11 | 12 | V3 |
| $A_1$ | 63 | 49 | 63 | 49 | 70 |
| $B_1$ | 7 | 21 | - | - | - |
| $B_2$ | - | - | 7 | 21 | - |
| $C_1$ | 30 | 30 | 30 | 30 | 30 |
| Eigenschaften | | | | | |
| E-Modul [N/mm²] | 11500 | 13000 | 11300 | 12600 | 9600 |
| MVI*1 [ml/10'] | 39 | 72 | 38 | 66 | 21 |
| Vicat B [°C] | 217 | 215 | 216 | 214 | 221 |
| Wasseraufnahme [%] | 1,0 | 0,8 | 0,9 | 0,7 | 1,3 |

MVI*1: Meßtemperatur 320°C

V3: Vergleichsversuch

Beispiele 13 bis 17 und Vergleichsbeispiele V4 bis V5 Herstellung von Verträglichkeitsvermittlern

Beispiel 13

Zu einer Lösung von 20 g $B_1$ in 150 ml N-Methylpyrrolidon wurden unter Inertgasatmosphäre bei 80°C 10 g $A_3$ unter Rühren zugegeben. Nach beendeter Zugabe wurde noch 2 Stunden bei 80°C weitergerührt. Das Reaktionsprodukt wurde mittels Wasser ausgefällt, isoliert und bei 120°C im Vakuum getrocknet.

Vergleichsbeispiel V4

Zu einer Lösung von 20 g $B_1$ in 150 ml N-Methylpyrrolidon wurden unter Inertgasatmosphäre bei 80°C 10 g $A_4$ unter Rühren zugegeben. Schon wenige Minuten nach der Zugabe von $A_4$ bildete sich ein Niederschlag. Durch den hohen Anteil an reaktiven Endgruppen in den Polyarylenethern kam es zu Mikrogelbildung bzw. Vernetzung. Das

Produkt war deshalb als Verträglichkeitsvermittler nicht geeignet.

Beispiel 14

Zu einer Lösung von 20 g $B_1$ in 150 ml N-Methylpyrrolidon wurden unter Inertgasatmosphäre bei 0°C 10 g $A_5$ unter Rühren zugegeben. Nach beendeter Zugabe von $A_5$ wurde noch 30 Minuten bei 0°C weitergerührt. Anschließend wurde 8 Stunden auf 190°C erhitzt. Nach Erkalten der Reaktionsmischung wurde das Produkt wie unter Beispiel 13 angegeben aufgearbeitet.

Vergleichsbeispiel V5

Zu einer Lösung von 20 g $B_1$ in 150 ml N-Methylpyrrolidon wurden unter Inertgasatmosphäre bei 0°C 10 g $A_6$ unter Rühren zugegeben. Schon wenige Minuten nach der Zugabe von $A_6$ bildete sich ein Niederschlag. Durch den hohen Anteil an reaktiven Endgruppen in den Polyarylenethern kam es zu Mikrogelbildung bzw. Vernetzung. Das Produkt war deshalb als Verträglichkeitsvermittler nicht geeignet.

Beispiel 15

Beispiel 14 wurde wiederholt jedoch wurde anstelle der dort angegebenen Komponenten die Komponenten $B_2$ und $A_5$ eingesetzt.

Beispiel 16

Eine Mischung aus 30 g $B_1$ und 20 g $A_5$ wurde in einem Haake-Kneter bei 320°C 5 Minuten intensiv gemischt, die erhaltene Formmasse wurde ausgetragen und zerkleinert. Von den erhaltenen Formmassen wurden ultradünne Schnitte angefertigt und elektronenmikroskopisch untersucht, s. Bild 2/2.

Beispiel 17

Eine Mischung aus 3 kg $B_1$ und 2 kg $A_5$ wurde in einem Zweiwellenextruder (ZSK 30 der Fa. Werner & Pfleiderer) bei 340°C gemischt. Der ausgetragene Strang wurde in einem Wasserbad abgekühlt und granuliert.

Die Ergebnisse der anwendungstechnischen Prüfungen sind Tabelle 3 zu entnehmen.

| Bsp.-Nr. | 13 | 14 | 15 | 16 | 17 |
|---|---|---|---|---|---|
| VZ [ml/g] | 62 | 41 | 44 | 43 | 41 |
| Tg [°C] | 207/218 | 207/214 | 205/214 | 207/214 | 207/214 |
| extrahierbarer Anteil $B_1$ oder $B_2$ [%] | 12 | 6 | 4 | 6 | 8 |

Aus Tabelle 3 läßt sich entnehmen, daß die Umsetzung zwischen Polyarylenethern A, die reaktive Endgruppen enthalten und Copolymeren B in hohen Ausbeuten verlaufen und daß in allen Fällen mehrphasige Produkte erhalten werden.

## Patentansprüche

**1.** Formmassen aus

A) 1 bis 99 Gew.-% einer Mischung aus Polyarylenethern, die reaktive Endgruppen enthalten und Polyarylenethern, die inerte Endgruppen enthalten, wobei weniger als 50 Gew.-%, bezogen auf A, Polyarylenether mit zwei reaktiven Endgruppen pro Kette sind und wobei die Polyarylenether die wiederkehrenden Einheiten I

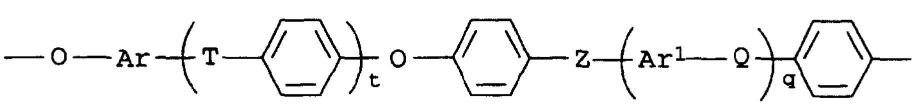 (I),

in denen t und q jeweils eine ganze Zahl 0, 1, 2 oder 3 bedeuten können,

T, Q und Z jeweils eine chemische Bindung oder eine Gruppe ausgewählt aus -O-, -S-, $-SO_2-$, S=O, C=O, -N=N-, $R^aC=CR^b-$ und $-CR^cR^d-$ sein können, mit der Maßgabe, daß mindestens eine der Gruppen T, Q oder Z $-SO_2-$ oder C=O bedeutet,

$R^a$ und $R^b$ jeweils ein Wasserstoffatom oder eine $C_1$- bis $C_{10}$-Alkylgruppe bedeuten,

$R^c$ und $R^d$ jeweils ein Wasserstoffatom, eine $C_1$- bis $C_{10}$-Alkyl-, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, bedeuten,

Ar und $Ar^1$ für $C_6$- bis $C_{18}$-Arylgruppen stehen, wobei diese Substituenten haben können, ausgewählt aus $C_1$- bis $C_{10}$-Alkyl, $C_6$- bis $C_{18}$-Aryl, $C_1$ bis $C_{10}$-Alkoxy und Halogen,

enthalten,

B) 1 bis 99 Gew.-% Copolymeren enthaltend Einheiten, die sich von

$b_1$) aromatischen Vinylverbindungen,
$b_2$) cyclischen α,β-ungesättigten Dicarbonsäureanhydriden und
$b_3$) cyclischen α,β-ungesättigten Dicarbonsäureimiden und welche am Stickstoff mit

- Wasserstoff,
- $C_1$- bis $C_{20}$-Alkyl oder $C_1$- bis $C_{20}$-Alkoxy, wobei die Kohlenstoffkette mit einem oder mehreren Sauerstoffatomen unterbrochen sein kann und keines der Sauerstoffatome des Alkoxyrestes direkt mit dem Stickstoffatom des Imids oder einem anderen Sauerstoffatom des Alkoxyrestes verknüpft ist,
- $C_4$- bis $C_{20}$-Cycloalkyl oder $C_1$- bis $C_2$-alkylsubstituiertem $C_4$- bis $C_{20}$-Cycloalkyl,
- $C_6$- bis $C_{18}$-Aryl oder $C_1$- bis $C_{10}$-alkylsubstituiertem $C_6$- bis $C_{18}$-Aryl

substituiert sind, und

C) 0 bis 60 Gew.-% faser- oder teilchenförmigen Füllstoffen ausgewählt aus der Gruppe Kohlenstoff, Glas, Quarz, Aramid, Alkali-, Erdalkalicarbonate, Alkali-, Erdalkalisilikate,

D) 0 bis 45 Gew.-% schlagzähmodifizierende Kautschuke, und

E) 0 bis 40 Gew.-% Flammschutzmittel, Pigmente und Stabilisatoren.

**2.** Formmassen nach Anspruch 1, in denen die Polyarylenether

$a_1$) 3 bis 97 Mol-% wiederkehrende Einheiten II

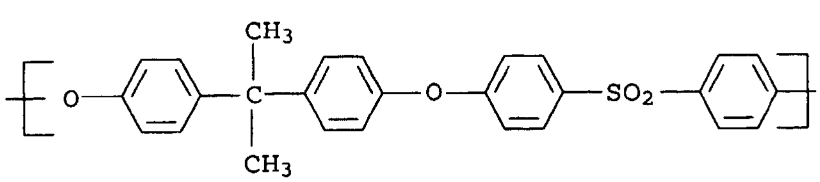

II

und

$a_2$) 3 bis 97 Mol-% wiederkehrende Einheiten III

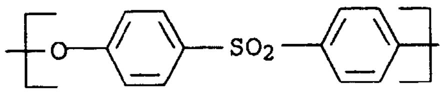

III

enthalten.

**3.** Formmassen nach einem der Ansprüche 1 oder 2, in denen die reaktiven Endgruppen Hydroxy-, Amino- oder Epoxidgruppen sind.

**4.** Formmassen nach einem der Ansprüche 1 bis 3, in denen die Copolymeren B Einheiten enthalten, die sich von

$b_1$) 20 bis 90 Mol-% der aromatischen Vinylverbindungen,
$b_2$) 1 bis 50 Mol-% der cyclischen $\alpha,\beta$-ungesättigten Dicarbonsäureanhydride und
$b_3$) 9 bis 50 Mol-% der cyclischen $\alpha,\beta$-ungesättigten Dicarbonsäureimide
$b_4$) 0 bis 30 Mol-% weiteren radikalisch polymerisierbarer Verbindungen

ableiten.

**5.** Formmassen nach einem der Ansprüche 1 bis 3, in denen die Copolymeren B Einheiten enthalten, die sich von

$b_1$) Styrol,
$b_2$) Maleinsäureanhydrid und
$b_3$) N-Phenylmaleinsäureimid

ableiten.

**6.** Formmassen nach einem der Ansprüche 1 bis 3, in denen die Copolymeren B erhältlich sind durch Umsetzen der aromatischen Vinylverbindungen $b_1$ und der cyclischen $\alpha,\beta$-ungesättigten Dicarbonsäureanhydride $b_2$ mit Ammoniak oder primären Aminen.

**7.** Formmassen nach Anspruch 6, in denen die Copolymeren B erhältlich sind durch Umsetzen von

$b_1$) 50 bis 75 Mol-% aromatischer Vinylverbindungen mit
$b_2$) 25 bis 50 Mol-% cyclischer $\alpha,\beta$-ungesättigter Dicarbonsäureanhydride in einer ersten Stufe und anschließende Umsetzung des so erhaltenen Reaktionsproduktes mit
$b_5$) Ammoniak oder primären Aminen, wobei das molare Verhältnis der Komponenten $b_2$:$b_5$ 0,9 bis 1,1 beträgt in einer zweiten Stufe.

**8.** Verwendung der Formmassen gemäß einem der Ansprüche 1 bis 7 zur Herstellung von Fasern, Folien oder Formteilen.

**9.** Verwendung der Formmassen nach Anspruch 8 zur Herstellung von Haushaltsgeräten oder medizinisch-technischen Geräten.

**10.** Formkörper, Folien oder Formteile hergestellt unter Verwendung der Formmassen gemäß einem der Ansprüche 1 bis 7.

**11.** Verwendung der Formmassen gemäß Anspruch 1 bis 3 zur Herstellung von Verträglichkeitsvermittlern.

**12.** Verträglichkeitsvermittler, erhältlich unter Verwendung der Formmassen gemäß Anspruch 4 oder 5.

**13.** Verfahren zur Herstellung von Verträglichkeitsvermittlern, dadurch gekennzeichnet, daß man

A) 1 bis 99 Gew.-% einer Mischung aus Polyarylenethern, die reaktive Endgruppen enthalten und Polyarylenethern, die inerte Endgruppen enthalten, wobei weniger als 50 Gew.-%, bezogen auf A, Polyarylenether mit

zwei reaktiven Endgruppen pro Kette sind und wobei die Polyarylenether die wiederkehrenden Einheiten I

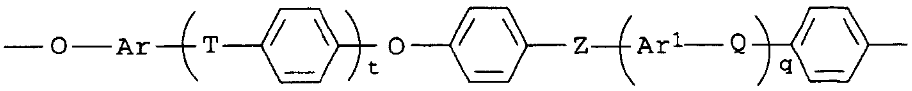

(I),

in denen t und q jeweils eine ganze Zahl 0, 1, 2 oder 3 bedeuten können,

T, Q und Z jeweils eine chemische Bindung oder eine Gruppe ausgewählt aus -O-, -S-, $-SO_2-$, S=O, C=O, -N=N-, $R^aC=CR^b-$ und $-CR^cR^d-$ sein können, mit der Maßgabe, daß mindestens eine der Gruppen T, Q oder Z $-SO_2-$ oder C=O bedeutet,

$R^a$ und $R^b$ jeweils ein Wasserstoffatom oder eine $C_1$- bis $C_{10}$-Alkylgruppe bedeuten,

$R^c$ und $R^d$ jeweils ein Wasserstoffatom, eine $C_1$- bis $C_{10}$-Alkyl-, $C_1$- bis $C_{10}$-Alkoxy- oder $C_6$- bis $C_{18}$-Arylgruppe, wobei die vorgenannten Gruppen jeweils mit Fluor- und/oder Chloratomen substituiert sein können, bedeuten,

Ar und $Ar^1$ für $C_6$- bis $C_{18}$-Arylgruppen stehen, wobei diese Substituenten haben können, ausgewählt aus $C_1$- bis $C_{10}$-Alkyl, $C_6$- bis $C_{18}$-Aryl, $C_1$ bis $C_{10}$-Alkoxy und Halogen,

enthalten,

B) 1 bis 99 Gew.-% Copolymeren enthaltend Einheiten, die sich von

$b_1$) aromatischen Vinylverbindungen,
$b_2$) cyclischen $\alpha,\beta$-ungesättigten Dicarbonsäureanhydriden und
$b_3$) cyclischen $\alpha,\beta$-ungesättigten Dicarbonsäureimiden welche am Stickstoff mit

- Wasserstoff,
- $C_1$- bis $C_{20}$-Alkyl oder $C_1$- bis $C_{20}$-Alkoxy, wobei die Kohlenstoffkette mit einem oder mehreren Sauerstoffatomen unterbrochen sein kann und keines der Sauerstoffatome des Alkoxyrestes direkt mit dem Stickstoffatom des Imids oder einem anderen Sauerstoffatom des Alkoxyrestes verknüpft ist,
- $C_4$- bis $C_{20}$-Cycloalkyl oder $C_1$- bis $C_2$-alkylsubstituiertem $C_4$- bis $C_{20}$-Cycloalkyl,
- $C_6$- bis $C_{18}$-Aryl oder $C_1$- bis $C_{10}$-alkylsubstituiertem $C_6$- bis $C_{18}$-Aryl

substituiert sind, und umsetzt.

**14.** Verfahren nach Anspruch 13, dadurch gekennzeichnet, daß man die Umsetzung bei 250 bis 400°C in der Schmelze durchführt.

**Claims**

**1.** A molding material comprising

A) from 1 to 99% by weight of a mixture of polyarylene ethers which contain reactive terminal groups and polyarylene ethers which contain inert terminal groups, less than 50% by weight, based on A, being polyarylene ethers having two reactive terminal groups per chain and the polyarylene ethers containing the recurring units I

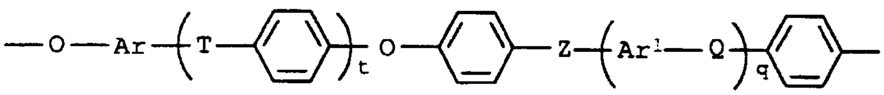

(I),

where t and q may each be an integer 0, 1, 2 or 3,
T, Q and Z are each a chemical bond or a group selected from -O-, -S-, $-SO_2-$, S=O, C=O, -N=N-, -$R^aC=CR^b$- and -$CR^cR^d$-, with the proviso that at least one of the groups T, Q or Z is $-SO_2-$ or C=O,
$R^a$ and $R^b$ are each hydrogen or $C_1$-$C_{10}$-alkyl,
$R^c$ and $R^d$ are each hydrogen, $C_1$-$C_{10}$-alkyl, $C_1$-$C_{10}$-alkoxy or $C_6$-$C_{18}$-aryl, where the abovementioned groups may each be substituted by fluorine and/or chlorine, and
Ar and $Ar^1$ are each $C_6$-$C_{18}$-aryl which may have substituents selected from $C_1$-$C_{10}$-alkyl, $C_6$-$C_{18}$-aryl, $C_1$-$C_{10}$-alkoxy and halogen,

B) from 1 to 99% by weight of copolymers containing units which are derived from

$b_1$) aromatic vinyl compounds,
$b_2$) cyclic a,β-unsaturated dicarboxylic anhydrides and
$b_3$) cyclic α,β-unsaturated dicarboximides and which are substituted on the nitrogen by

- hydrogen,
- $C_1$-$C_{20}$-alkyl or $C_1$-$C_{20}$-alkoxy, it being possible for the carbon chain to be interrupted by one or more oxygen atoms and none of the oxygen atoms of the alkoxy radical being linked directly to the nitrogen atom of the imide or to another oxygen atom of the alkoxy radical,
- $C_4$-$C_{20}$-cycloalkyl or $C_1$-$C_2$-alkyl-substituted $C_4$-$C_{20}$-cycloalkyl,
- $C_6$-$C_{18}$-aryl or $C_1$-$C_{10}$-alkyl-substituted $C_6$-$C_{18}$-aryl

and

C) from 0 to 60% by weight of fibrous or particulate fillers selected from the group consisting of carbon, glass, quartz, Aramid, alkali metal carbonates, alkaline earth metal carbonates, alkali metal silicates and alkaline earth metal silicates,

D) from 0 to 45% by weight of rubber impact modifiers and

E) from 0 to 40% by weight of flameproofing agents, pigments and stabilizers.

**2.** A molding material as claimed in claim 1, in which the polyarylene ethers contain

$a_1$) from 3 to 97 mol % of recurring units II

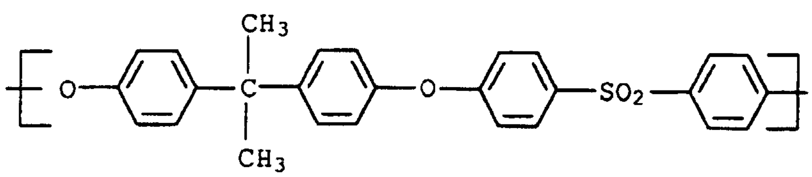

II

and
$a_2$) from 3 to 97 mol % of recurring units III

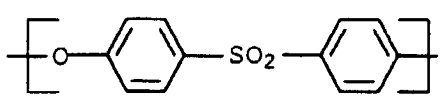

III.

**3.** A molding material as claimed in claim 1 or 2, in which the reactive terminal groups are hydroxyl, amino or epoxy groups.

**4.** A molding material as claimed in any of claims 1 to 3, in which the copolymers B contain units which are derived from

$b_1$) from 20 to 90 mol % of the aromatic vinyl compounds,
$b_2$) from 1 to 50 mol % of the cyclic $\alpha,\beta$-unsaturated dicarboxylic anhydrides,
$b_3$) from 9 to 50 mol % of the cyclic $\alpha,\beta$-unsaturated dicarboximides and
$b_4$) from 0 to 30 mol % of further compounds capable of undergoing free radical polymerization.

**5.** A molding material as claimed in any of claims 1 to 3, in which the copolymers B contain units which are derived from

$b_1$) styrene,
$b_2$) maleic anhydride and
$b_3$) N-phenylmaleimide.

**6.** A molding material as claimed in any of claims 1 to 3, in which the copolymers B are obtainable by reacting the aromatic vinyl compounds $b_1$ and the cyclic $\alpha,\beta$-unsaturated dicarboxylic anhydrides $b_2$ with ammonia or primary amines.

**7.** A molding material as claimed in claim 6, in which the copolymers B are obtainable by reacting

$b_1$) from 50 to 75 mol % of aromatic vinyl compounds with
$b_2$) from 25 to 50 mol % of cyclic $\alpha,\beta$-unsaturated dicarboxylic anhydrides in a first stage and subsequent reaction of the reaction product thus obtained with
$b_5$) ammonia or primary amines, the molar ratio of the components $b_2 : b_5$ being 0.9-1.1 in a second stage.

**8.** The use of a molding material as claimed in any of claims 1 to 7 for the production of a fiber, film or shaped article.

**9.** The use of a molding material as claimed in claim 8 for the production of a household appliance or medical apparatus.

**10.** A molding, film or shaped article produced using the molding material as claimed in any of claims 1 to 7.

**11.** The use of a molding material as claimed in any of claims 1 to 3 for preparing a compatibilizer.

**12.** A compatibilizer obtainable using a molding material as claimed in claim 4 or 5.

**13.** A process for the preparation of a compatibilizer, wherein

A) from 1 to 99 % by weight of a mixture of polyarylene ethers which contain reactive terminal groups and polyarylene ethers which contain inert terminal groups, less than 50% by weight, based on A, being polyarylene ethers having two reactive terminal groups per chain and the polyarylene ethers containing the recurring units I

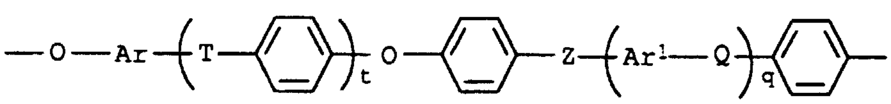 (I),

where t and q may each be an integer 0, 1, 2 or 3,
T, Q and Z are each a chemical bond or a group selected from -O-, -S-, $-SO_2-$, S=O, C=O, -N=N-, $-R^aC=CR^b-$ and $-CR^cR^d-$, with the proviso that at least one of the groups T, Q or Z is $-SO_2-$ or C=O,
$R^a$ and $R^b$ are each hydrogen or $C_1$-$C_{10}$-alkyl,
$R^c$ and $R^d$ are each hydrogen, $C_1$-$C_{10}$-alkyl, $C_1$-$C_{10}$-alkoxy or $C_6$-$C_{18}$-aryl, where the abovementioned groups may each be substituted by fluorine and/or chlorine, and
Ar and $Ar^1$ are each $C_6$-$C_{18}$-aryl which may have substituents selected from $C_1$-$C_{10}$-alkyl, $C_6$-$C_{18}$-aryl, $C_1$-$C_{10}$-alkoxy and halogen, are reacted with

B) from 1 to 99 % by weight of copolymers containing units which are derived from

$b_1$) aromatic vinyl compounds,

$b_2$) cyclic $\alpha,\beta$-unsaturated dicarboxylic anhydrides and
$b_3$) cyclic $\alpha,\beta$-unsaturated dicarboximides which are substituted on the nitrogen by

- hydrogen,
- $C_1$-$C_{20}$-alkyl or $C_1$-$C_{20}$-alkoxy, it being possible for the carbon chain to be interrupted by one or more oxygen atoms and none of the oxygen atoms of the alkoxy radical being linked directly to the nitrogen atom of the imide or to another oxygen atom of the alkoxy radical,
- $C_4$-$C_{20}$-cycloalkyl or $C_1$-$C_2$-alkyl-substituted $C_4$-$C_{20}$-cycloalkyl,
- $C_6$-$C_{18}$-aryl or $C_1$-$C_{10}$-alkyl-substituted $C_6$-$C_{18}$-aryl

**14.** A process as claimed in claim 13, wherein the reaction is carried out at from 250 to 400°C in the melt.

**Revendications**

**1.** Masses à mouler à base

A) de à 99% en poids d'un mélange d'éthers de polyarylène, qui contiennent des groupes terminaux réactifs, et d'éthers de polyarylène, qui contiennent des groupes terminaux inertes, mélange dans lequel il y a moins de 50% en poids, par rapport à A, d'éther de polyarylène avec deux groupes terminaux réactifs par chaîne et dans lequel les éthers de polyarylène comportent les unités répétitives I :

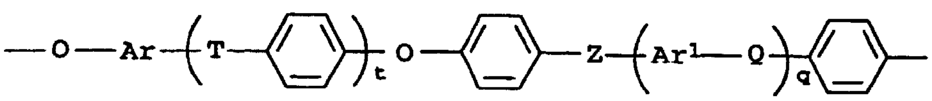 (I)

dans lesquelles t et q peuvent chacun représenter un nombre entier de 0, 1, 2 ou 3,
T, Q et Z peuvent être chacun une liaison chimique ou un groupe choisi parmi -O-, -S-, $-SO_2-$, S=O, C=O, -N=N-, $R^aC=CR^b$- et $-CR^cR^d-$, avec la condition qu'au moins un des groupes T, Q ou Z représente $-SO_2-$ ou C=O,
$R^a$ et $R^b$ représentent chacun un atome d'hydrogène ou un groupe alkyle en $C_1$-$C_{10}$,
$R^c$ et $R^d$ représentent chacun un atome d'hydrogène, un groupe alkyle en $C_1$-$C_{10}$, un groupe alcoxy en $C_1$-$C_{10}$ ou un groupe aryle en $C_6$-$C_{18}$, les groupes précités pouvant chacun être substitués par des atomes de fluor et/ou de chlore,
Ar et $Ar^1$ représentent des groupes aryle en $C_6$-$C_{18}$, ces derniers pouvant présenter des substituants choisis parmi de l'alkyle en $C_1$-$C_{10}$, de l'aryle en $C_6$-$C_{18}$, de l'alcoxy en $C_1$-$C_{10}$ et de l'halogène,

B) de à 99% en poids de copolymères contenant des unités qui dérivent

$b_1$) de composés vinyliques aromatiques,
$b_2$) d'anhydrides d'acide dicarboxylique a,$\beta$-insaturés, cycliques, et
$b_3$) d'imides d'acide dicarboxylique $\alpha,\beta$-insaturés, cycliques,

lesquels sont substitués sur l'atome d'azote par

- de l'hydrogène,
- de l'alkyle en $C_1$-$C_{20}$ ou de l'alcoxy en $C_1$-$C_{20}$, la chaîne carbonée pouvant être interrompue par un ou plusieurs atomes d'oxygène et aucun des atomes d'oxygène du radical alcoxy n'étant directement rattaché à l'atome d'azote de l'imide ou à un autre atome d'oxygène du radical alcoxy,
- du cycloalkyle en $C_4$-$C_{20}$ ou du cycloalkyle en $C_4$-$C_{20}$ substitué par un alkyle en $C_1$-$C_2$,
- de l'aryle en $C_6$-$C_{18}$ ou de l'aryle en $C_6$-$C_{18}$ substitué par de l'alkyle en $C_1$-$C_{10}$, et

C) de 0 à 60% en poids de matières de remplissage en forme de fibres ou de particules, qui sont choisies parmi le groupe du carbone, du verre, du quartz, de l'aramide, des carbonates de métal alcalin, des carbonates de métal alcalino-terreux, des silicates de métal alcalin, des silicates de métal alcalino-terreux,
D) de 0 à 45% en poids de caoutchoucs modifiant la résilience, et

E) de 0 à 40% en poids d'agents ignifuges, de pigments et de stabilisants.

**2.** Masses à mouler suivant la revendication 1, dans lesquelles les éthers de polyarylène contiennent

$a_1$) 3 à 97 moles % d'unités répétitives II :

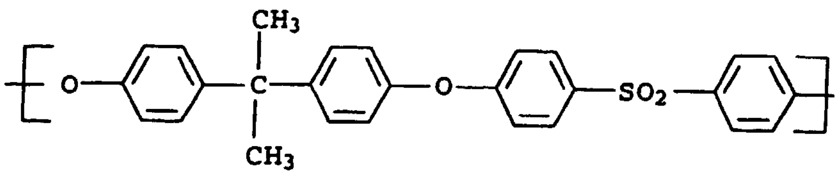

(II)

et

$a_2$) 3 à 97 moles % d'unités répétitives III :

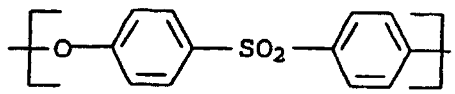

(III)

**3.** Masses à mouler suivant l'une des revendications 1 et 2, dans lesquelles les groupes terminaux réactifs sont des groupes hydroxy, amino ou époxy.

**4.** Masses à mouler suivant l'une des revendications 1 à 3, dans lesquelles les copolymères B contiennent des unités qui dérivent

$b_1$) de 20 à 90 moles % des composés vinyliques aromatiques,
$b_2$) de à 50 moles % des anhydrides d'acide dicarboxylique $\alpha,\beta$-insaturés cycliques, et
$b_3$) de 9 à 50 moles % des imides d'acide dicarboxylique $\alpha,\beta$-insaturés cycliques,
$b_4$) de 0 à 30 moles % d'autres composés polymérisables par voie radicalaire.

**5.** Masses à mouler suivant l'une des revendications 1 à 3, dans lesquelles les copolymères B contiennent des unités qui dérivent

$b_1$) de styrène,
$b_2$) d'anhydride d'acide maléique, et
$b_3$) d'imide d'acide N-phénylmaléique.

**6.** Masses à mouler suivant l'une des revendications 1 à 3, dans lesquelles les copolymères B peuvent être obtenus par réaction des composés vinyliques aromatiques $b_1$ et des anhydrides d'acide dicarboxylique $\alpha,\beta$-insaturés cycliques $b_2$ avec de l'ammoniac ou des amines primaires.

**7.** Masses à mouler suivant la revendication 6, dans lesquelles les copolymères B peuvent être obtenus par réaction

$b_1$) de 50 à 75 moles % de composés vinyliques aromatiques avec
$b_2$) de 25 à 50 moles % d'anhydrides d'acide dicarboxylique $\alpha,\beta$-insaturés cycliques dans une première étape, et ensuite par réaction du produit réactionnel ainsi obtenu avec
$b_5$) de l'ammoniac ou des amines primaires, le rapport molaire entre les composants $b_2/b_5$ étant de 0,9 à 1,1, dans une deuxième étape.

**8.** Utilisation des masses à mouler suivant l'une des revendications à 7, pour la fabrication de fibres, de feuilles ou de pièces façonnées.

**9.** Utilisation des masses à mouler suivant la revendication 8, pour la fabrication d'appareils domestiques ou d'instruments de technique médicale.

**10.** Corps moulés, feuilles ou pièces façonnées, fabriqués par l'utilisation des masses à mouler suivant l'une des revendications 1 à 7.

**11.** Utilisation des masses à mouler suivant l'une des revendications 1 à 3, pour la fabrication d'agents médiateurs de compatibilité.

**12.** Agents médiateurs de compatibilité, que l'on peut obtenir par l'utilisation des masses à mouler suivant l'une des revendications 4 et 5.

**13.** Procédé de préparation d'agents médiateurs de compatibilité, caractérisé en ce qu'on fait réagir

A) 1 à 99% en poids d'un mélange d'éthers de polyarylène, qui contiennent des groupes terminaux réactifs, et d'éthers de polyarylène, qui contiennent des groupes terminaux inertes, mélange dans lequel il y a moins de 50% en poids, par rapport à A, d'éthers de polyarylène ayant deux groupes terminaux réactifs par chaîne et dans lequel les éthers de polyarylène contiennent les unités répétitives I :

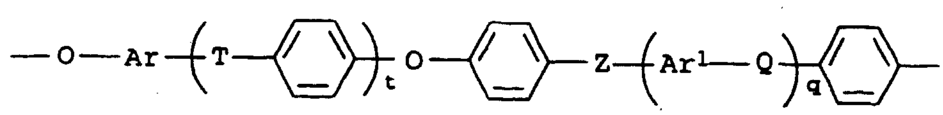

(I)

dans lesquelles t et q peuvent chacun représenter un nombre entier de 0, 1, 2 ou 3,
T, Q et Z peuvent être chacun une liaison chimique ou un groupe choisi parmi -O-, -S-, $-SO_2-$, S=O, C=O, -N=N-, $R^aC=CR^b$- et $-CR^cR^d-$, avec la condition qu'au moins un des groupes T, Q ou Z représente $-SO_2-$ ou C=O,
$R^a$ et $R^b$ représentent chacun un atome d'hydrogène ou un groupe alkyle en $C_1$-$C_{10}$,
$R^c$ et $R^d$ représentent chacun un atome d'hydrogène, un groupe alkyle en $C_1$-$C_{10}$, un groupe alcoxy en $C_1$-$C_{10}$ ou un groupe aryle en $C_6$-$C_{18}$, les groupes précités pouvant chacun être substitués par des atomes de fluor et/ou de chlore,
Ar et $Ar^1$ représentent des groupes aryle en $C_6$-$C_{18}$, ces derniers pouvant présenter des substituants choisis parmi de l'alkyle en $C_1$-$C_{10}$, de l'aryle en $C_6$-$C_{18}$, de l'alcoxy en $C_1$-$C_{10}$ et de l'halogène, et

B) 1 à 99% en poids de copolymères contenant des unités qui dérivent

$b_1$) de composés vinyliques aromatiques,
$b_2$) d'anhydrides d'acide dicarboxylique $\alpha,\beta$-insaturés, cycliques, et
$b_3$) d'imides d'acide dicarboxylique $\alpha,\beta$-insaturés, cycliques, lesquels sont substitués sur l'atome d'azote par

- de l'hydrogène,
- de l'alkyle en $C_1$-$C_{20}$ ou de l'alcoxy en $C_1$-$C_{20}$, la chaîne carbonée pouvant être interrompue par un ou plusieurs atomes d'oxygène et aucun des atomes d'oxygène du radical alcoxy n'étant directement rattaché à l'atome d'azote de l'imide ou à un autre atome d'oxygène du radical alcoxy,
- du cycloalkyle en $C_4$-$C_{20}$ ou du cycloalkyle en $C_4$-$C_{20}$ substitué par de l'alkyle en $C_1$-$C_2$,
- de l'aryle en $C_6$-$C_{18}$ ou de l'aryle en $C_6$-$C_{18}$ substitué par de l'alkyle en $C_1$-$C_{10}$.

**14.** Procédé selon la revendication 13, caractérisé en ce qu'on effectue la réaction à 250 jusqu'à 400°C dans la masse fondue.

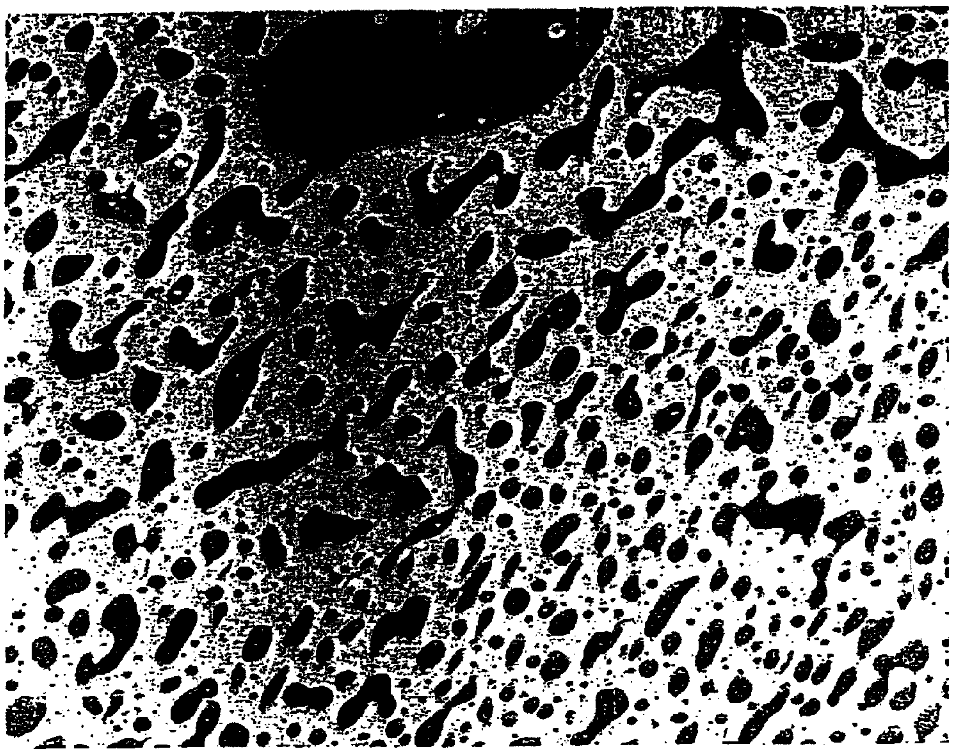

Abb. 1

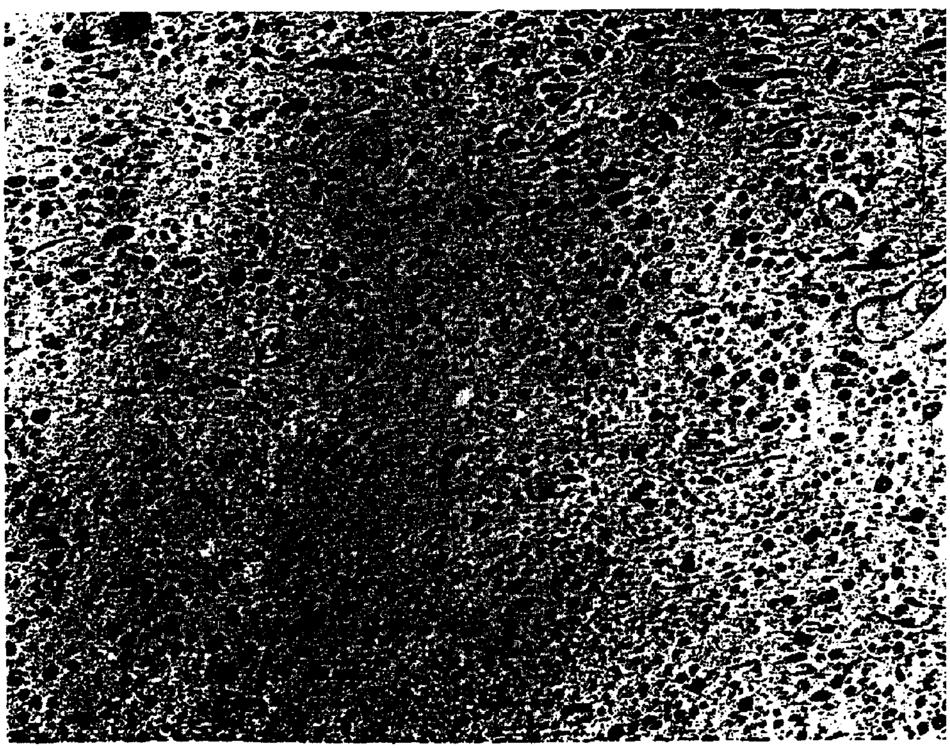

Abb. 2